# EUROPEAN PATENT APPLICATION

(11) **EP 1 237 103 A1**
(43) Date of publication of application: **04.09.2002**
(21) Application number: 01110442.9
(22) Date of filing: 27.04.2001
(51) Int. Cl.: G06F 17/60

(54) **Household appliance, network system, household appliance control method using a network, computer program product achieving the control method and a computer-readable data storage medium**

(30) Priority: 28.02.2001 JP 2001055804
(71) Applicant: Square Co., Ltd., Tokyo 153-8688 (JP)
(72) Inventor: Sakaguchi, Hironobu, Meguro-ku, Tokyo 153-8688 (JP)
(74) Representative: Grünecker, Kinkeldey, Stockmair & Schwanhäusser Anwaltssozietät

(57) **Abstract**

A network system and home appliance connected to a network effectively utilize data collected from home appliances to achieve more effective advertising and sales promotion using the home appliance. A home appliance (e.g., refrigerator) connects to a service center via a network. Benefit is provided to the consumer by reimbursing the consumer for the power consumed by refrigerator operation. When the consumer places something in the refrigerator, the consumer enters product information using a bar code scanner disposed to the refrigerator, and when removing something from the refrigerator enters the product name and amount used. This information is then sent to the service center, which by collecting information can accurately identify consumer lifestyle preferences. Advertising from a marketing company selected according to the consumer information can then be presented in a timely manner using a display or speakers disposed to the refrigerator.

## Description

### CROSS-REFERENCE TO RELATED APPLICATION

The present disclosure relates to subject matter contained in Japanese Patent Application No. 2001-55804, filed on February 28, 2001, the disclosure of which is expressly incorporated herein by reference in its entirety.

### BACKGROUND OF THE INVENTION

### 1. Field of the Invention

The present invention relates to a household appliance, a network system, a household appliance control method using a network, a computer program product achieving the control method, and a computer-readable data storage medium.

### 2. Description of Related Art

Advances in computer technology have made it possible to incorporate computers into common household appliances, and thereby enable precise control of appliance operation. Products that can track and record the actual appliance operating conditions have also been introduced. Some of these products can even transmit the recorded operating conditions to an external device. Advances in communications technology have also made it possible to remotely control appliances in the home over the telephone.

It is also possible to collect appliance usage information in a manner similar to that used for determining television viewing rates. Hotels also commonly use computers to monitor the use of refrigerators installed in guest rooms.

A common feature of these appliances and applications is that information is sent in only one direction, and what information is collected is determined in advance and fixed.

Monitoring systems similar to those used for determining television viewing rates are also used with home appliances to gather impressions and user reactions in response to actual appliance usage. This information is then reflected in future product development.

Japanese Patent Laid-open No. 272429/1996 even teaches a computer installed in the home to collect information about the overall use of appliances in the home.

The purpose of the information gathered from appliances and applications such as described above is, however, to improve appliance quality or to more efficiently control appliance operation. Collected appliance operation data is reflected only in the appliance from which it was gathered, and is not used to the greatest effect.

### SUMMARY OF THE INVENTION

The present invention was conceived as a solution to the above problem, and an object of our invention is to provide a network system improving the effective application of data collected from home appliances and achieving an effective sales promotion effect and advertising effect using home appliances; a home appliance connected to this network system; a home appliance control method using a network and a computer program product and computer-readable data storage medium embodying this control method.

To achieve this object, in a network system including a network interconnecting at least one home appliance having a data output system that outputs information, and a server system for communicating data with the home appliance, the home appliance includes a product identification system that identifies product used in conjunction with operation of the home appliance. The home appliance also includes a transmission system that sends product information identified by the product identification system via the network to the server system; and a receiving system that receives advertising information or sales promotion information sent from the server system by way of the network. The home appliance further includes a data output system that outputs information received by the receiving system from the output system.

The server system includes an interpreting system that interprets lifestyle conditions of the home appliance user based on the information received from the home appliance; and a transmission system. The transmission system sends to the home appliance advertising information or sales promotion information corresponding to the lifestyle of the home appliance user based on the lifestyle information interpreted by the interpreting system.

The home appliance is preferably a refrigerator, and the product information identified by the product identification system is preferably information indicative of products stored in the refrigerator and consumption of stored products. Alternatively, identification of products by the product identification system is accomplished by the home appliance user, and compensation commensurate to power consumption by the home appliance is returned to the home appliance user.

Further preferably, the transmission system sends information optimized according to the information sent from the home appliance. Alternatively, the transmission system sends product replenishment data corresponding to consumption of information stored in the home appliance, or consumption of supplementary information for use in the home appliance.

The invention further provides a control method for a home appliance using a network in a network system including multiple home appliances having a data output system, and a server system for communicating data with the home appliance. The control method is characterized by placing each home appliance where it will be used by a user; and inputting on the home appliance side usage data indicative of consumption of products used with the home appliance in conjunction with home appliance operation. The method also includes sending the input product information via the network to the server system; receiving from the server system advertising information or sales promotion information selected according to the product information and outputting the received information from an output system of the home appliance. The information received from the server system is advertising information or sales promotion information selected according to the home appliance user lifestyle information, which is identified from the information received by the server system from the home appliance. As a result, the control method further provides advertising information or sales promotion information according to the lifestyle information for the home appliance.

The home appliance is preferably a refrigerator, and the product information is preferably information indicative of products stored in the refrigerator and consumption of the stored products. Alternatively, compensation commensurate to power consumption by the home appliance is returned to the home appliance user.

Further preferably, information sent from the server system is information selected as appropriate according to information sent from the home appliance. Alternatively, information sent from the server system is product replenishment data corresponding to consumption of information stored in the home appliance, or consumption supplementary information for use in the home appliance.

The present invention further provides a home appliance connected to a network that receives information from a server system connected to the network. The home appliance includes a product identification system that identifies products used in conjunction with home appliance operation; and a transmission system that sends product information identified by the product identification system via the network to the server system. The home appliance further includes a receiving system that receives advertising information or sales promotion information sent from the server system; and an output system that outputs information received by the receiving system. The information sent from the server system is advertising information or sales promotion information corresponding to the lifestyle of the home appliance user as determined by the server system from the information received from the home appliance.

Other objects and a fuller understanding of the invention will become apparent and appreciated by referring to the following description and claims taken in conjunction with the accompanying drawings.

### BRIEF DESCRIPTION OF THE DRAWINGS

Fig. 1 shows the configuration of a network system to which a home appliance according to a preferred embodiment of the invention is connected;
Fig. 2 shows in detail the configuration of an exemplary home appliance according to a preferred embodiment of the invention;
Fig. 3 shows an example of managing the operating status and advertising and sales promotion information in a home appliance according to a preferred embodiment of the invention;
Fig. 4 shows a flow chart used to describe operation control of a home appliance according to a preferred embodiment of the invention;
Fig. 5 shows a flow chart of the control operation of a service center in a preferred embodiment of the invention; and
Fig. 6 shows an exemplary process for computing and remitting compensation to the home appliance user in a preferred embodiment of the invention.

### DESCRIPTION OF THE PREFERRED EMBODIMENTS

A preferred embodiment of the present invention is described below with reference to the accompanying figures.

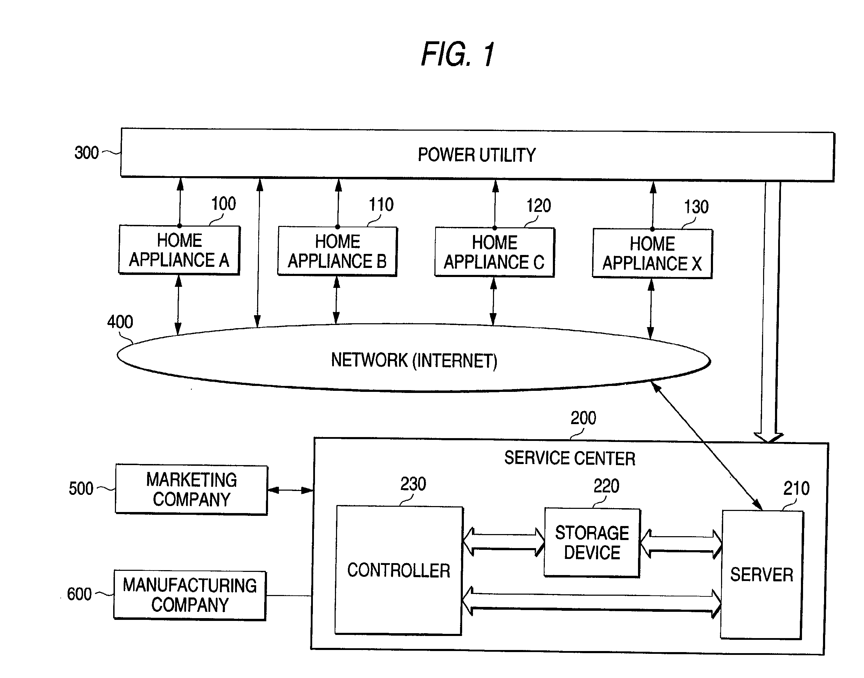

A network system, home appliance connected to the network, and home appliance control method using the network according to a preferred embodiment of the present invention are described with reference to Figs. 1-3.

The configuration of a network system to which a home appliance according to this preferred embodiment of the present invention is connected is described first with reference to Fig. 1. Fig. 1 shows an exemplary configuration of a network system to which a home appliance according to a preferred embodiment of the present invention is connected.

Home appliance A 100, home appliance B 110, home appliance C 120, and home appliance X 130 can connect to service center 200 by way of network 400, which is further described in detail below according to a preferred embodiment of the invention. These home appliances can be the same type of appliance or difference types of appliances, but must be able to transmit consumer lifestyle information even if content indicative of appliance operating status (further described below) and data transmitted differs according to appliance type. Furthermore, the number of home appliances connected to the network shall not be limited to that shown in Fig. 1, and any number of appliances can be connected for data communication.

For simplicity, the home appliances connected to the network in the present embodiment are refrigerators by way of example only. It will be obvious to one with ordinary skill in the related art that the invention shall not be limited to use with refrigerators, and our invention applies to any type of appliance as noted above.

The service center 200 installs the home appliance in the user location, and operates a server system for controlling supply of data to the home appliances and collecting appliance operation data from the appliances. The service center 200 contracts with marketing company 500, for example, to supply advertising information to the home appliances and receives the advertising information from the marketing company 500. The service center 200 also devises ways to raise system maintenance expenses and compensation, which is paid to the home appliance user, equivalent to the electric power consumption of the home appliance further described below.

The service center 200 operates a server 210 for controlling the interface with the network 400 and receives from a power utility 300 information about the power consumption of each appliance or about the electrical bills for the installation where the home appliance is located. A storage device 220 stores data collected from the appliances, as well as the advertising content and sales promotion information to be sent to the home appliances. A controller 230 analyzes the data received from the appliances by way of server 210, and updates the information stored to storage device 220.

When the service center 200 receives a purchase request from an appliance, it automatically issues a purchase order to a manufacturing company 600 or marketing company 500.

It should be noted that multiple types and patterns of advertising information and sales promotion information are stored to storage device 220. The advertising information and sales promotion information sent to the home appliances can therefore be tailored to the lifestyle, likes, and hobbies of the specific home in which an appliance is installed, and the same information is not necessarily sent to all appliance installations.

The power utility 300 supplies the power used in the home and consumed by the installed appliances 100 to 130. The power utility 300 meters power consumption by the home unit, or if possible by the appliance unit, and bills the consumer for the power used. When power consumption by individual appliances can be metered, this per-appliance power consumption data is reported to the service center 200.

Network 400 enables data communication between the appliances 100 to 130 and the service center 200, and is preferably the Internet. The marketing company 500 pays the service center 200 a specific advertising fee for supplying the desired product advertisements and sales promotion information to the appliances 100 to 130. The manufacturing company 600 contracts with service center 200 for similar service.

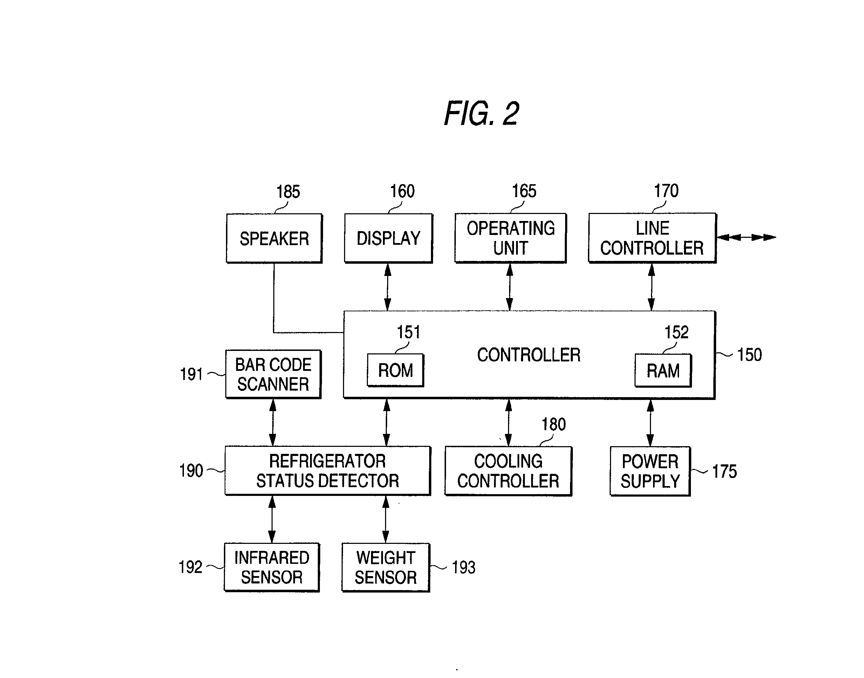

The configuration of a home appliance according to this preferred embodiment of the invention is described next with reference to Fig. 2. Fig. 2 shows the detailed configuration of a home appliance according to this preferred embodiment of the invention. It should be noted that the home appliance shown in Fig. 2 is assumed by way of example only to be a refrigerator.

Referring to Fig. 2, controller 150 provides overall control of the home appliance. It is typically a one-chip CPU having internal ROM 151 and RAM 152. Control is implemented according to a program stored to ROM 151.

Information sent from the service center 200, such as advertising information and sales promotion information as noted above, and data input from operating unit 165, is presented for the user on display 160. Display 160 is disposed in the middle of the refrigerator door, for example, and is preferably an LCD. The user can enter data from the operating unit 165, which is preferably a touch screen disposed in front of the display 160. It should be noted that by using a touch screen, different functions can be achieved by changing the content presented on display 160.

A line controller 170 controls the network interface to enable data communication with service center 200 via network 400. Power supply 175 supplies power to the appliance.

The cooling controller 180 controls the temperature inside the refrigerator. A speaker 185 outputs audio according to commands from the service center 200, as well as prompts for input from operating unit 165.

A refrigerator status detector 190 controls bar code scanner 191, infrared sensor 192, and weight sensor 193 to detect changes in conditions inside the refrigerator. That is, infrared sensor 192 and weight sensor 193 detect goods being put into and taken out of the refrigerator, and product information is entered by bar code scanner 191. Product consumption information is entered from operating unit 165.

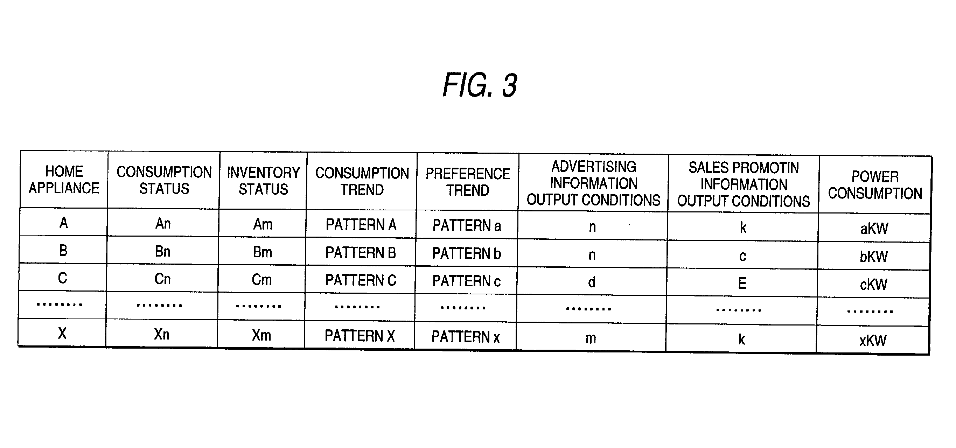

Some of the appliance status data collected and stored in the storage device 220 of service center 200 is described next below with reference to Fig. 3. Fig. 3 shows some of the home appliance operating status, advertising, and sales promotion information that is managed in this embodiment of the invention.

Information stored for each home appliance includes, as shown in Fig. 3, consumption data such as what types of products are purchased and put into the refrigerator at what frequency, inventory data such as what types of products are kept for how long in the refrigerator, consumption trends analyzed from the consumption data and inventory data, consumer preferences similarly analyzed from the consumption data and inventory data, advertising information output data, sales promotion information output methods, and power consumption. The content of the advertising information and sales promotion information sent to a particular installation can then be changed according to the consumption trend and consumer preference data.

An update history for each of these items (except power consumption) covering a specific past period of time is also stored. This update history can then be referenced to identify consumption trends and preference trends for each house in which the home appliance is installed.

Power consumption data can be gathered by the electric utility, or an accumulator can be disposed in the appliance to accumulate power-on time or consumption data, sending the accumulated data via network 400 to service center 200 at regular intervals.

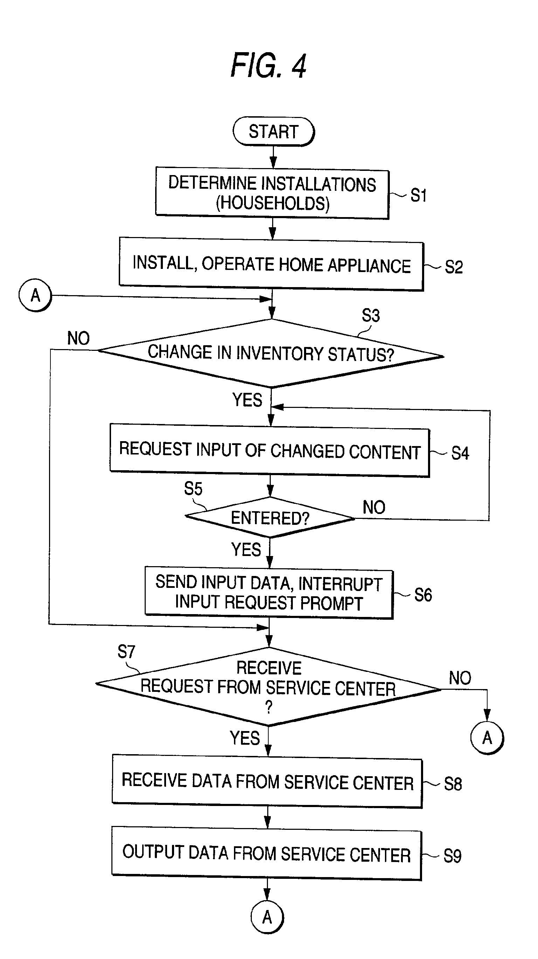

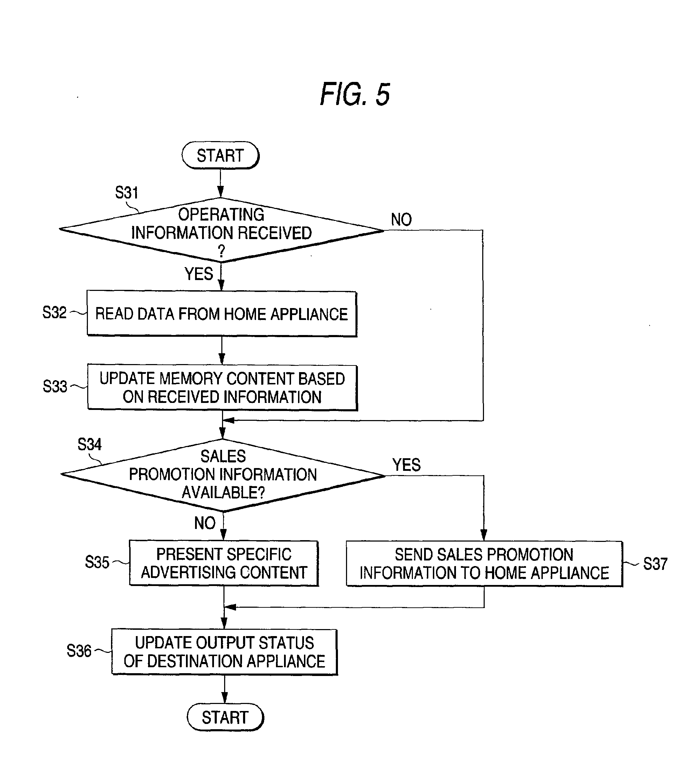

An appliance control method using a network system configured as described above is described next below with reference to the flow charts in Fig. 4 and Fig. 5. Operational control of the home appliance (refrigerator) according to this preferred embodiment of the invention is described first with reference to Fig. 4. Fig. 4 is a flow chart of the operational control of a home appliance in this preferred embodiment.

First, (step S1) service center 200 negotiates with marketing company 500, for example, to determine the number of home appliances to be placed in customer installations, and then selects and obtains permission for installation based on the family make-up, ages, occupations, and other customer information. An installation selection operation is performed. It should be noted that consumers can also receive installations based on their response to solicitations for participants in the service. Note, further, that this process is not dependent upon the progress of subsequent steps, and preferably can be pursued at any time.

Next, the home appliances are installed in the identified homes and the residents are asked to start using the appliances (step S2). It should be noted that whether the appliance is purchased by the user or is purchased by the service center 200 for installation in a home can be determined case by case or by appliance.

Users accepting the appliance service then sequentially input appliance usage information by means of the following process. For example, an electric refrigerator is typically constantly on, and each time a product is put into or removed from the refrigerator, a bar code scanner 191 scans the product bar code to identify the product. The following control is accomplished by controller 150 running the programmed control procedure stored to ROM 151.

That is, refrigerator status detector 190 detects by infrared sensor 192, weight sensor 193, or other systems if the refrigerator door is opened, or if a product inside the refrigerator is removed or a new product is put into the refrigerator. If there is no change in the in-refrigerator conditions, the procedure advances to step S7.

If a change in in-refrigerator conditions is detected in step S3, the procedure advances to step S4 and a prompt (content change input request message) is presented on display 160 or by speaker 185 asking the user to enter what changed. Whether the changed content was entered is then detected (step S5). If the information is not entered, the procedure loops back to S4 to again prompt the user for the information.

If information about the products put into or removed from the refrigerator is input in step S5, the procedure advances to step S6 and the input result (changed content) is transmitted to the service center 200. The input request prompt output in step S4 is also cancelled, and the procedure advances to step S7.

It should be noted that the input results in step S6 are presented on display 160 for user confirmation. The input results are transmitted to the service center 200 after the user confirms the content is correct by, for example, pressing a "confirm" key. It should be noted that product information can be entered quickly, easily, and accurately by using bar code scanner 191 to read the bar code applied to most products. Data can also be entered using the operating unit 165.

Note that the input request prompt is displayed until the product information is entered, but the display area can be automatically reduced after a specific period of time, or can be interrupted in order to present advertising information or sales promotion information.

Whether there is a data receive request from the line controller 170 in response to a request to send data from the service center 200 to the appliance via network (Internet) 400 is then detected in step S7. If there is no receive request, the procedure loops back to step S3.

If there is a data receive request from line controller 170 in step S7, the procedure advances to step S8, where line controller 170 is controlled to receive information sent from service center 200 via network 400, and the received data is stored to a reserved area in RAM 152. The received data is then presented on display 160 (step S9) or output via speaker 185 as necessary, and the procedure loops back to step S3.

The information received from service center 200 may be, for example, a reminder to replenish (a purchase prompt) the product indicated in step S5 as removed, a message about how to replenish the product, or a regular display for a popular product. It could also be a cooking recipe for the product removed from or put into the refrigerator. Information that is timely and particularly useful for the user can also be provided by presenting a recipe that uses foods that have been kept in the refrigerator for a longer period of time. It is thus possible to present information that is timely and particularly useful for the appliance user, and which has a particularly effective impact as advertising information or sales promotion information.

A control process run by the controller 230 of service center 200 is described next with reference to the flow chart in Fig. 5. It should be noted that controller 230 comprises a CPU, ROM, and RAM similarly to controller 150 shown in Fig. 2, and is comprised to run the control process described below according to the programmed control procedure stored in ROM.

The controller 230 first detects whether a request to send operating status information (such as what products have been put into or removed from the refrigerator) has been received from an appliance connected to network 400, and whether the operating information has been received by server 210. The server 210 automatically receives data from the home appliance, and when receiving is completed stores the information in a reserved area allocated for each appliance in storage device 220. Reception is confirmed by notifying the controller 230 of a change in the stored data. If operating information is not received, the procedure advances to step S34.

If operating information is received in step S31, the procedure advances to step S32 and the operating data received from the home appliance is read from storage device 220. The received data is then analyzed in step S33, and based on the result data relating to that home appliance (see Fig. 3) is updated in storage device 220. Then the procedure advances to step S34.

Based on the result from step S33, or a request from the marketing company or other advertiser, whether there is any sales promotion information to send to the home appliance is detected (step S34). If there is no sales promotion information to send, the procedure advances to step S35, where server 210 is controlled to display an advertisement according to a predetermined display control procedure, and the advertising information is sent to the home appliance. It should be noted that controller 230 determines the advertising content and transmission procedure according to the analytical results for the individual home appliance.

The operating condition of the home appliance that sent the information is then determined, whether there is a change in consumption status or preference pattern is determined, and the product registration data for the particular home appliance is updated according to the results of these evaluations when a change is needed (step S36). Then the procedure loops back to step S31.

It is thus possible to change the pattern of data sent to the home appliance in step S35 or step S37, and thus provide information better suited to the consumption status.

If in step S34 there is sales promotion information to send to the home appliance, the procedure advances to step S37 and the sales promotion information is sent to the home appliance. Then the procedure advances to step S37.

This sales promotion information could be, for example, a buying guide for the removed product or a cooking recipe for foods stored in the refrigerator, information about products related to the appliance or new replacement product information, information about a different product that is a good match for use in conjunction with the appliance, prompts to use up products stored in the refrigerator based on how long and what foods are stored, for example, a message prompting the user to not forget about products in the

### refrigerator, or other types of information. Then the procedure advances to step S36.

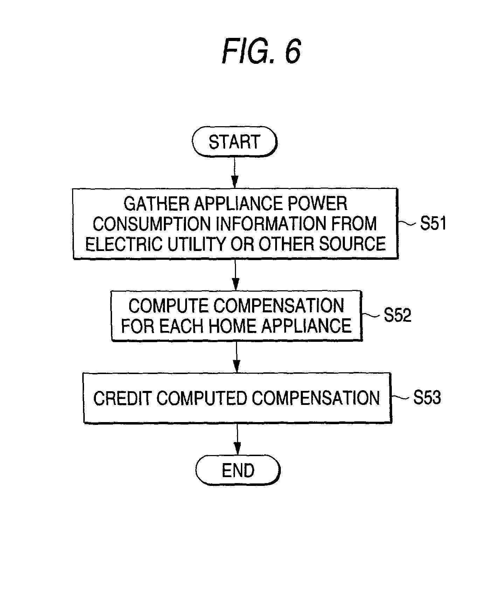

It should be noted that the control method described above controls operation between a home appliance and service center 200 via a network. It is also possible in this preferred embodiment of the invention to run a process for extracting home appliance power consumption data and return to the customer an amount equal to the electrical bill for the power consumed by the appliance as compensation for providing information about the consumer's use of the appliance. This process is further described below with reference to Fig. 6.

Power consumption data for each applicable home appliance is collected from the electric utility at a regular interval, such as once a month (step S51). This information can be collected from the appliance via a direct network system, or directly from the appliance when the information can be displayed on the appliance.

The compensation to be paid according to the power consumption by each home appliance is then computed in step S52. If power consumption cannot be detected for the individual appliance, the approximate power consumption can be calculated based on the type of appliance and hours that the product is on. The compensation amount computed in step S53 is then deposited to the customer's account.

It will be obvious to one with ordinary skill in the related art that control steps described above can all be accomplished using the computer in controller 230. In this case the control program can be easily kept current with changes in various conditions by simply updating the computer control program.

The consumer information collected by the service center 200 in this preferred embodiment of the invention provides a detailed look at all foods specifically consumed by a particular household. By providing the service to and collecting information from a demographically diverse range of households, diverse consumer trends can be accurately analyzed at the individual or household level.

The collected information will thus be quite valuable for manufacturers and marketing companies, and is therefore particularly attractive for companies that contract to place advertising. It therefore follows that even if compensation is paid for the collected data as noted in step S53 above, the value of the collected data is greater than the compensation paid, and a business model that is satisfactory to both the company and the consumer that receives compensation commensurate with the power consumed can be provided.

As described above, this embodiment of the present invention connects a home appliance 100 (such as a refrigerator) to a service center 200 by way of a network 400 (such as the Internet) and provides benefit to the consumer by paying the consumer an amount commensurate to the power consumed by the refrigerator or other appliance. Furthermore, because the user enters product information with a bar code scanner disposed to the refrigerator when putting products into the refrigerator 100, and enters the product name and amount removed when taking products out of the refrigerator, and the entered information is sent to the service center 200, the present invention also provides benefit to the service center 200 because the service center 200 can gather data accurately reflecting consumption patterns and consumer lifestyle.

It is therefore possible to present timely advertising selected from the advertising information provided from a marketing company 500, for example, on a display or speaker disposed to the refrigerator 100, and the company can obtain detailed, highly reliable consumer data.

It should be noted that while compensation commensurate to the power consumed by the refrigerator is provided when the home appliance is a refrigerator as described above, the invention shall obviously not be so limited, and the compensation paid can be determined according to, for example, the type of appliance involved. Further alternatively, the compensation can be determined according to the value of the information collected, or the amount of time and effort required for data collection.

Furthermore, because the service center 200 can also gather accurate information relating to the different lifestyles, hobbies, and likes of different consumers, the service center 200 can provide this information to the marketing company 500 or manufacturing company 600 hoping to induce consumer purchases of their own products. The marketing company 500 or manufacturing company 600 can then provide or present advertising information and sales promotion information more specifically matching specific consumer desires, and can thus expect a positive return.

Continuing diversification of consumer desires and expectations has made it particularly important for product providers (manufacturers and marketers, for example) to know what types of products and information are wanted by a diverse range of consumers. In such cases the present invention makes it possible to collect information about virtually all aspects of the food consumed in a home. This information can then be effectively used to provide products that more specifically address particular consumer desires.

It should be further noted that the functions described above can all be achieved according to a program stored to memory in the controller, for example. This program can be previously stored to the controller, or can be provided stored to another type of computer-readable data storage medium, including flexible disc storage media, CD-ROM or other magneto-optical media, and DVD. It will be obvious to one with ordinary skill in the related art that the program can be provided via network 400.

It is therefore possible by the preferred embodiment of the present invention described above to provide a network system, a home appliance connected to a network, and a home appliance control method using a network, that is extremely beneficial to both consumers and service providers. The service center 200 is able to provide home appliances and effective advertising and sales promotion information, conduct highly precise, focused market research identifying consumption trends and preferences of individual consumers. Moreover, consumers can be provided the cost of operating the home appliance in return for the information.

Furthermore, providers of products and advertising, for example, can use the information collected from the home appliances to develop and achieve even more effective sales promotions and advertising using the home appliances.

As described above, the present invention makes it possible to collect accurate information about consumer consumption trends and preferences, and know what type of products and information are wanted by a diverse range of consumers. Furthermore, home appliance users can receive benefits commensurate with the information provided, while the information collected from the home appliances can be effectively used to develop even more effective sales promotions and advertising using the home appliances.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims.

## Claims

1. A network system comprising a network interconnecting at least one home appliance having a data output system that outputs information, and a server system for communicating data with the home appliance, wherein:
the home appliance comprises:
a product identification system that identifies products used in conjunction with operation of the home appliance;
a transmission system that sends product information identified by the product identification system via the network to the server system;
a receiving system that receives advertising information or sales promotion information sent from the server system by way of the network; and
a data output system that outputs information received by the receiving system; and
the server system comprises :
an interpreting system that interprets lifestyle conditions of the home appliance user based on the information received from the home appliance; and
a transmission system that sends to the home appliance advertising information or sales promotion information corresponding to the lifestyle of the home appliance user based on the lifestyle information interpreted by the interpreting system.

2. The network system as described in claim 1, wherein the home appliance comprises a refrigerator, and the product information identified by the product identification system comprises information indicative of products stored in the refrigerator and consumption of stored products.

3. The network system as described in claim 1, wherein identification of product by the products identification system is accomplished by the home appliance user, and compensation commensurate to power consumption by the home appliance is returned to the home appliance user.

4. The network system as described in claim 1, wherein the transmission system of the server system sends information optimized according to the information sent from the home appliance.

5. The network system as described in claim 1, wherein the product information sent by the transmission system comprises product replenishment data corresponding to consumption of information stored in the home appliance, or consumption supplementary information for use in the home appliance.

6. A control method for a home appliance using a network in a network system comprising a plurality of home appliances having data output systems, and a server system for communicating data with the home appliance, the control method comprising:
placing the home appliance where it will be used by a user,
inputting on the home appliance side usage data indicative of consumption of product used with the home appliance in conjunction with home appliance operation,
sending the input product information via the network to the server system,
receiving advertising information or sales promotion information selected according to the product information and sent from the server system,
outputting the received information with the data output system of the home appliance, the information received from the server system being advertising information or sales promotion information selected according to the home appliance user lifestyle information, which is identified from the information received by the server system from the home appliance, and
providing advertising information or sales promotion information according to the lifestyle information for the home appliance.

7. The control method for a home appliance using a network as described in claim 6, wherein the home appliance comprises a refrigerator, and the product information comprises information indicative of products stored in the refrigerator and consumption of stored product.

8. The control method for a home appliance using a network as described in claim 6, wherein compensation commensurate to power consumption by the home appliance is returned to the home appliance user.

9. The control method for a home appliance using a network system as described in claim 6, wherein information sent from the server system comprises product replenishment data corresponding to consumption of information stored in the home appliance, or consumption supplementary information for use in the home appliance.

10. A home appliance connected to a network and receiving information from a server system connected to the network, comprising:
a product identification that identifies products used in conjunction with home appliance operation;
a transmission system that sends product information identified by the product identification system via the network to the server system;
a receiving system that receives advertising information or sales promotion information sent from the server system; and
an output system that outputs information received by the receiving system;
wherein the information sent from the server system comprises advertising information or sales promotion information corresponding to the lifestyle of the home appliance user as determined by the server system from the information received from the home appliance.

11. The home appliance as described in claim 10, wherein the home appliance comprises a refrigerator, and the product information identified by the product identification system comprises information indicative of products stored in the refrigerator and consumption of the stored products.

12. The home appliance as described in claim 10, wherein information sent from the server system comprises product replenishment data corresponding to consumption of information stored in the home appliance, or consumption supplementary information for use in the home appliance.

13. A computer program product achieving the functionality of claim 1.

14. A computer program product achieving the functionality of claim 6.

15. A computer program product achieving the functionality of claim 10.

16. A computer-readable data storage medium for storing a computer program product achieving the functionality of claim 1.

17. A computer-readable data storage medium for storing a computer program product achieving the functionality of claim 6.

18. A computer-readable data storage medium for storing a computer program product achieving the functionality of claim 10.
